**Europäisches Patentamt**

**European Patent Office**

**Office européen des brevets**

(19)

(11) Publication number : **0 478 370 A2**

(12) # EUROPEAN PATENT APPLICATION

(21) Application number : **91308862.1**

(22) Date of filing : **27.09.91**

(51) Int. Cl.[5] : **G01N 15/08**

(30) Priority : **27.09.90 US 588754**

(43) Date of publication of application :
**01.04.92 Bulletin 92/14**

(84) Designated Contracting States :
**DE DK FR GB NL**

(71) Applicant : **WESTERN ATLAS INTERNATIONAL, INC.**
**10205 Westheimer, P.O. Box 1407**
**Houston Texas 77251-1407 (US)**

(72) Inventor : **Nolen, Gary Lynn**
**2903 Arrowhead**
**Sugar Land, Texas 77479 (US)**
Inventor : **Kersey, David G.**
**4001 Hancock Place**
**Plano, Texas 75023 (US)**

(74) Representative : **Godsill, John Kenneth et al**
**Haseltine Lake & Co. Hazlitt House 28**
**Southampton Buildings Chancery Lane**
**London WC2A 1AT (GB)**

(54) Method for obtaining porosity and permeability using minerology and textural parameters.

(57) A method is disclosed for calculating the porosity and permeability of materials using compositional and textural parameters. The step of determining the compositional parameters include identifying the constituent components comprising the sample. From the composition, and with knowledge of the sample area, one can readily identify foreign materials which may affect the porosity and permeability. Furthermore from the composition, the samples may be readily grouped or classified with samples having similar composition. The method provides one manner of discriminating between such samples. Following composition, the sample is disaggregated and the grain size distribution is determined. From the grain size, and following a correction/adjustment to the distribution, an optimum grain index is calculated. The optimum grain index is then correlated to a porosity coefficient which is then used to calculate the porosity. From the porosity, permeability is readily calculated based upon recognized relationships. The results of the method produce an output correlating the porosity to permeability as a function of sample location.

FIG. 4

This invention relates to the determination of a hydraulic characteristic of a material. It is particularily applicable to the determination of the porosity and permeability of porous materials, such as unconsolidated materials.

Permeability and porosity are important parameters in determining whether a material may transmit a fluid and how much fluid may be stored. With respect to petroleum production, such characteristics influence the migration, accumulation, volume, and distribution of fluids for the reservoir, and just as significantly determine the ability of the reservoir to release their liquids and gases in production.

In 1856, the French hydrologist Henri Darcy studied the ease with which a fluid flowed through a porous medium, resulting in a method for directly measuring permeability based upon the amount of fluid passing through a given volume over a determined period. In 1898, C. S. Slichter published a paper involving a theoretical investigation of the motion of ground waters for the United States Geological Survey. Since these early studies, numerous scientists have strived to accurately determine the factors controlling fluid volume and flow through consolidated and unconsolidated sediments. Substantially all studies have concentrated on the flow of water through subsurface sediments or rocks.

These porosity and permeability studies focused on grain size distribution, geometric mean, sorting, skewness and other variables of a sample. From these studies, the relationships of porosity and permeability have been defined by a variety of mathematical expressions, each taking into consideration various factors. Examples of such relationships may be found in papers by G. M. Fair and L. P. Hatch, 1933, "Fundamental Factors Governing the Streamline Flow of Water Through Sand," pp.1551-1565, J. Am. Water Works Assoc., 25; Bedinger, M.S., 1961, "Relation between median grain size and permeability in the Arkansas River Valley, Arkansas, U.S. Geol. Surv. Professional Paper 292, p. C-31, Short Papers in the Geologic and Hydrologic Sciences, Art. 147; Krumbein and Monk, 1942, "Permeability as a function of the size parameters of unconsolidated sand", Am. Inst. Met. Engr., Tech. Pub.; Folk, R.L., 1955, "Petrology of Sedimentary Rocks," pp.42-53, University of Texas Press, Austin, Texas; Griffith, J.D., 1955, "Petrography and Petrology of the Cow Run Sand, St. Marys, W. Va., J. Sediment. Petrol., 1(1), 15-31; Kozeny, J., 1953, "Das wasser in boden, grundwasserbewegung," Hydraulik, 380-445; and Marshall, T. J., 1958, "A Relation Between Permeability and Size Distribution of Pores," J. Soil Sci., Oxford University Press, 9, 1-8.

In addition to grain size characteristics, subsequent studies examined the affect of mineralogy in the porosity and permeability of sediments. Such investigations were based on the theory that changes in the depositional environment and provenance of the sediment were paralleled by changes in the mineralogy of the sediment. Relationships following this theory were disclosed in a 1987 paper by M. M. Herron entitled, "Estimating the Intrinsic Permeability of Clastic Sediments from Geochemical Data." Herron attempted to determine the mineralogy of the frameworks grains and clay components by geochemical well logging signals. The mineralogical data were than related to measured porosity values to estimate the intrinsic permeability of clastic formations.

Other techniques used to determine porosity and permeability include fluid displacement, mercury porosimetry, thin section analysis and photomicrography. All of the above techniques provide varying degrees of accuracy in deriving the porosity and permeability of porous materials.

According to a first aspect of the invention there is provided a method for determining a hydraulic characteristic of a material, characterised by the steps of:

a) determining composition and textural parameters of the material;

b) determining an optimum grain index from said parameters; and

c) defining for the determined composition a relationship between the optimum grain index and a hydraulic coefficient and determining therefrom the hydraulic coefficient corresponding to the determined optimum grain index.

The method may also comprise normalising the textural parameters for contaminants prior to determining the optimum grain index therefrom.

None of the prior art techniques correct for errors such as the potential fracturing of individual grains caused by the collection process. Additionally, none of the prior art techniques account for errors in the pore volume as a result of compression or dilation of the sample volume at the instant of collection. Moreover, none of the prior art techniques correct for the fluids and other filtrates which invade and alter the pore volume. There has been a long felt, yet unsolved, need for a method to determine the porosity and permeability of unconsolidated sediments taking into account errors introduced during the collection process. Moreover a technique has been desired which readily identifies contaminants introduced during the collection process. It will be appreciated that the present invention can be implemented to deal with these problems. More generally it will be seen that the invention may be implemented so as to provide porosity and permeability values at costs considerably less than for conventional coring and with consistent porosity and permeability values for sediments.

One embodiment of the invention is a method for calculating the hydraulic characteristics (porosity and permeability) of unconsolidated material from composition and textural parameters in which, from the texture and composition, the extent of alteration suffered by the sample during the collection process is calculated and is applied to correct the textural data. The corrected data are used to calculate an optimum grain index for the sample which is in turn related to a hydraulic coefficient (porosity or permeability) derived from a standard of similar composition and grain index and used to determine the porosity and permeability-to air-values.

According to a second aspect of the invention there is provided a method for determining a hydraulic characteristic of a material, comprising the steps of:

a) calculating composition and textural parameters of the material;

b) normalizing the textural parameters for contaminants;

c) determining an optimum grain index from the normalised textural parameters;

d) defining a relationship between the optimum grain index and a hydraulic coefficient; and

e) calculating the hydraulic characteristic of the material using the hydraulic coefficient.

According to a third aspect of the invention there is provided a method for determining porosity of a sample, comprising the steps of:

a) determining a composition of constituent materials comprising the sample;

b) calculating textural parameters of the constituent materials;

c) determing an optimum grain index for the constituent materials;

d) determining a relationship between the optimum grain index and a varible used to define porosity; and

e) calculating the porosity from the porosity variable.

According to another aspect of the invention there is provided a method for calculating a hydraulic characteristic of a sample of the earth from mineralogy and textural parameters, comprising the steps of:

a) determining a weight percent for each constituent comprising the sample;

b) deriving a grain size distribution for the sample;

c) normalizing the grain size distribution;

d) determining an optimum grain size index from the normalised grain size distribution;

e) calculating the hydraulic characteristic of the sample according to a relationship between the optimum grain index and a hydraulic coefficient; and

f) displaying the porosity and permeability for the sample.

For a better understanding of the invention and to show how the same may be carried into effect, reference will now be made, by way of example, to the accompanying drawings in which:

Figure 1 is a general diagram illustrating a well penetrating the surface of the earth;

Figure 2 is an enlarged illustration of a portion of the well in Figure 1 depicting a sample being taken from the well;

Figure 3 is another view of a portion of the well illustrating a method for taking a sample from the side of the well;

Figure 4 is a general flow diagram depicting the steps of an embodiment of the invention;

Figure 5 is a flow diagram illustrating the steps involved in determining the composition of a sample;

Figure 6 is a flow chart illustrating one embodiment of a classification scheme for the samples;

Figure 7 is a flow chart depicting another embodiment of a classification scheme that groups samples having similar composition;

Figure 8 is a flow diagram illustrating steps that may be used to determine the textural parameters of a sample;

Figure 9 illustrates the steps used to calculate an optimum grain index;

Figure 10 graphically represents two curves illustrating a relationship between optimum grain index and a porosity or hydraulic coefficient used to define the porosity of a sample; and

Figure 11 graphically represents two curves illustrating a relationship between optimum grain index and a permeability coefficient (also a hydraulic variable or coefficient) used to define the permeability-to-air value of a sample.

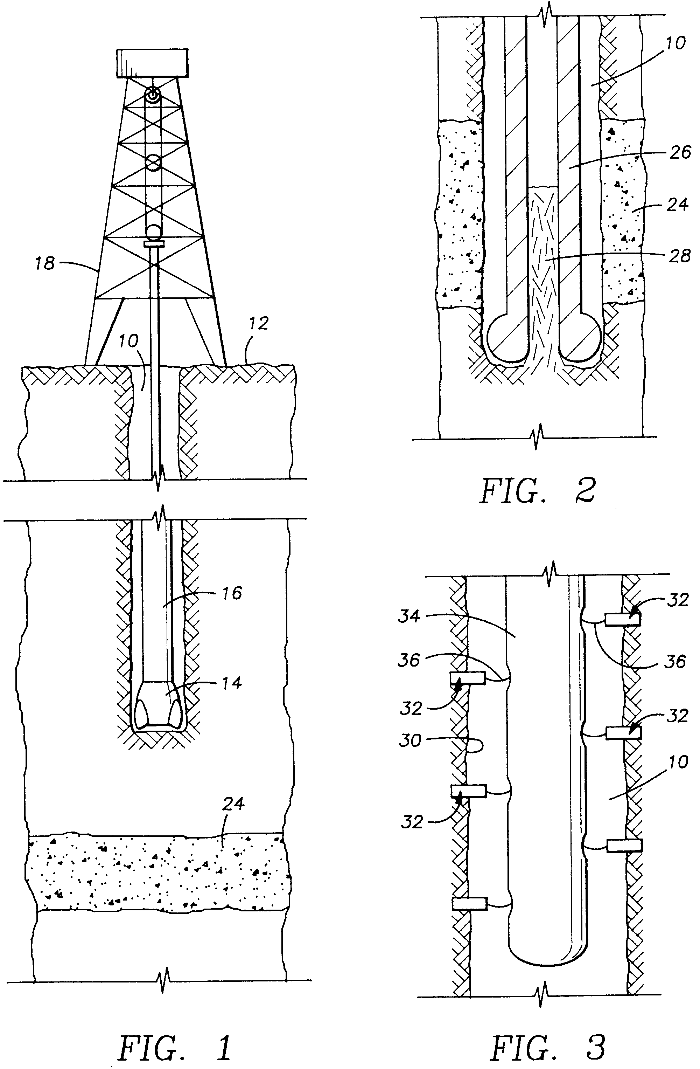

Figure 1 is a general diagram illustrating a well 10 penetrating the surface 12 of the earth. The well 10 is formed by a drill bit 14 disposed at the end of a length of drill pipe 16 turned by a derrick 18 located at the surface 12. Drilling fluid is circulated through the pipe to cool the drill bit and remove the cuttings from the well. Often because of the porous nature of the subsurface formations, drilling fluid is forced into the sidewalls of the well forming what in the industry is termed a "mud cake." The drilling fluid often contains various compounds designed to prevent the well from "blowing-out." These compounds "weight up" the drilling fluid to counteract pressures exerted by unexpected gas concentrations or high fluid pressures existing in the subsurface. One common additive is barite, a dense mineral used to "weight-up" the drilling fluid.

Once the drill bit has reached a zone of interest 24, samples of the sediment are often collected. The primary purpose for the samples is to determine the presence of hydrocarbons, the volume of hydrocarbons, whether the zone is capable of producing the hydrocarbons, and what additional steps may be necessary to assist the flow of hydrocarbons into the well. Figure 2 is an enlarged illustration of a portion of the well in Figure 1 depicting a sample being taken from the well. Samples from the zone 24 may be taken by a device 26 well known in the art which extracts a length of core 28 from the interval of interest 24. The core 28 is returned to the surface for further study. Other small core plugs may be taken from the core for further analysis. The plugs may be used to make thin sections, or placed in devices under a confining pressure to determine the hydraulic characteristics such as porosity and permeability.

Figure 3 is yet another view of a portion of the well illustrating a different method for taking samples from the well such as sidewall coring. This technique involves impacting the sidewall 30 of the well 10 with a tool 32 driven by an explosive charge contained in a sonde 34. The tool 32 penetrates the sidewall 30 of the well and captures a sample of the adjacent formation. Each tool 32 is typically coupled to the sonde 34 by a steel cable 36 such that the samples are withdrawn from the well as the sonde is returned to the surface. An improved sidewall coring device utilizes a cylindrical drill bit which is directed into the sidewall of the well. The sample is retrieved and deposited in a chamber until sampling is complete.

Using the explosive-driven collection method, it is not unusual for samples to consist of a small amount of material. Sample length may range between 3 millimeters and 10 centimeters. The sample may be poorly indurated or it may have been partially disaggregated (dilated) during the collection process. Alternatively, a previously unconsolidated sample may have become better consolidated as a result of the impact occurring in the collection process.

It is not unusual for the pore volume to be altered by the invasion of drilling fluid or "mud filtrate." As the drilling fluid invades the sediment, the solid particles in the filtrate eventually block the pore throats resulting in the development of a "mud cake" rind on the sample. The mud cake is formed by the adhesion of the drilling-fluid compounds to the wall of the bore hole once the pore throats of the formation have been blocked. The effect of the mud cake is to reduce the loss of drilling fluid into the formation.

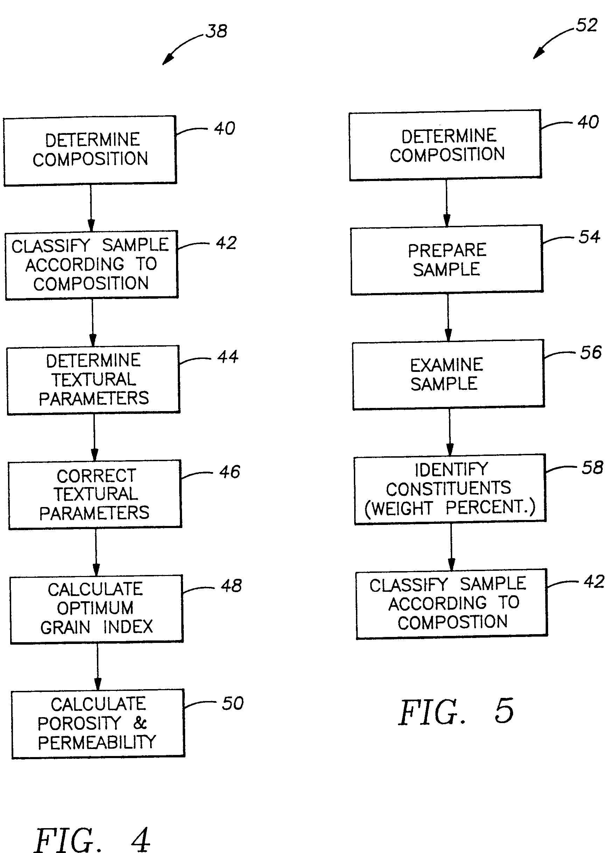

Figure 4 is a flow diagram 38 generally depicting the major steps of a preferred embodiment of the invention. Following collection of the sample using one of the above described techniques,it is preferred that the composition of the constituent components be determined, shown as step 40. According to the composition and relative percentages, the samples may be classified or categorized as suggested by step 42. As shown by step 44, once the composition of the constituents has been determined and the samples have been categorized, the texture of the sample is determined. Texture includes characteristics such as the grain size distribution, sorting, and shape of the grains in a sample. Following the textural analysis, the textural data may be corrected for contaminants shown by box 46. "Contaminants" or "contamination" as used in this disclosure includes any element or act which affects the original pore structure of the sample including fluid-induced contamination and/or collection-induced errors such as grain fracturing or grain compaction. Subsequent to the step 46 of correcting, it is contemplated that the optimum grain index be determined, step 48. Such index is then used to determine other variables used in the porosity and permeability calculations (step 50).

Figure 5 is another flow diagram 52 illustrating the steps involved in determining the composition of a sample (step 40). Generally the composition of a sediment or rock may be determined by a variety of methods, including X-ray diffraction, thin-section analysis, or near infrared spectroscopy. Recently developments have been made in determining the composition of sediments using well-logging techniques. Whatever method is employed it is preferred that the composition be converted to weight percent for reasons that will be apparent below. For the purposes of this discussion, it has been found that near-infrared spectroscopy provides the best results and is therefore the preferred technique. Such a technique is described in detail in United States Patent 4,839,516, the substance of which is incorporated herein by reference.

According to the near-infrared technique for determining the mineralogy of a sample, a representative portion of the sample is crushed to a fine powder (step 54). The powder is placed in a transparent matrix and scanned 56 by a nearinfrared beam. A portion of the infrared beam spectrum is absorbed by each different constituent comprising the sample. The portion of the spectrum not absorbed is detected and compared to known standards 58 to identify the individual constituents and their relative weight percentages. The calculated weight percentages of the mineral constituents may then be stored in a computer memory or recorded in tabular form for later reference.

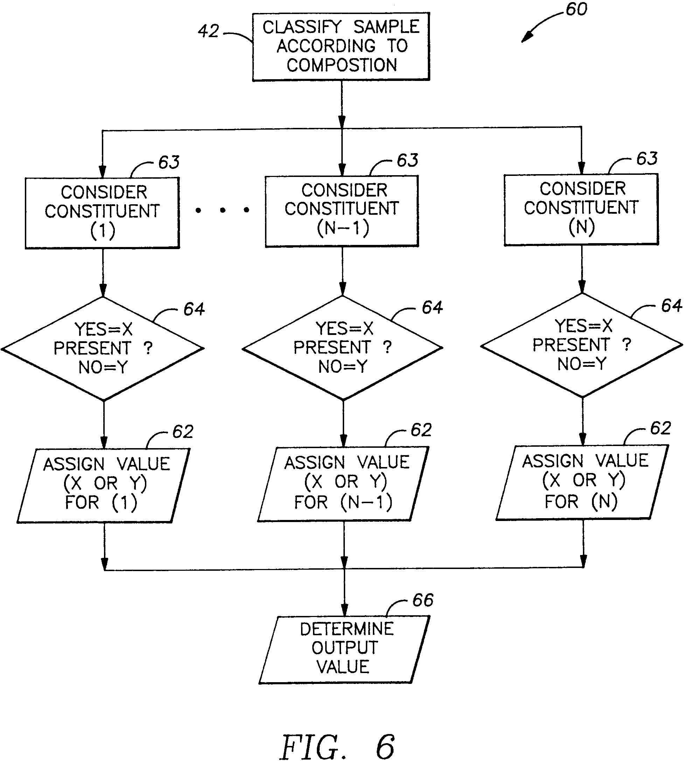

According to the relative weight percentages of constituents, each sample may be classified or categorized 42 according to its composition. Figure 6 is a flow chart 60 illustrating one embodiment of a classification scheme for the samples. The purpose of the classification scheme is to discriminate between samples of different composition. For each sample, the classification scheme assigns a value (step 62) for each mineral group or constituent considered (step 63) to indicate its presence or absence in the sample. According to step 64, if a sample contains a particular mineral, a first value (such as a 1) may be given. If the mineral is absent, a second value (such as a 0) is given. Following such scheme, the resulting number or array of ones and zeros may represent a binary number or real number, so long as samples of different composition may be distinguished from each other according to the values determined at step 66. This method is not limited by the present scheme, for any other scheme may also be employed.

In addition to using the composition as a discriminant between samples, this step also provides a means to readily identify contaminants introduced into the sample which may affect subsequent porosity and permeability calculations. For example, the mineral barite rarely occurs naturally in sediments and is often used to "weight up" the drilling fluid to prevent blow out of the well. Smectite clay may also be introduced to reduce the loss of drilling fluid into the subsurface formations. These materials invade the pore space of the material and will affect the porosity and permeability calculations. Samples containing the barite will fall into separate classifications or categories and can be handled separately as will be discussed below.

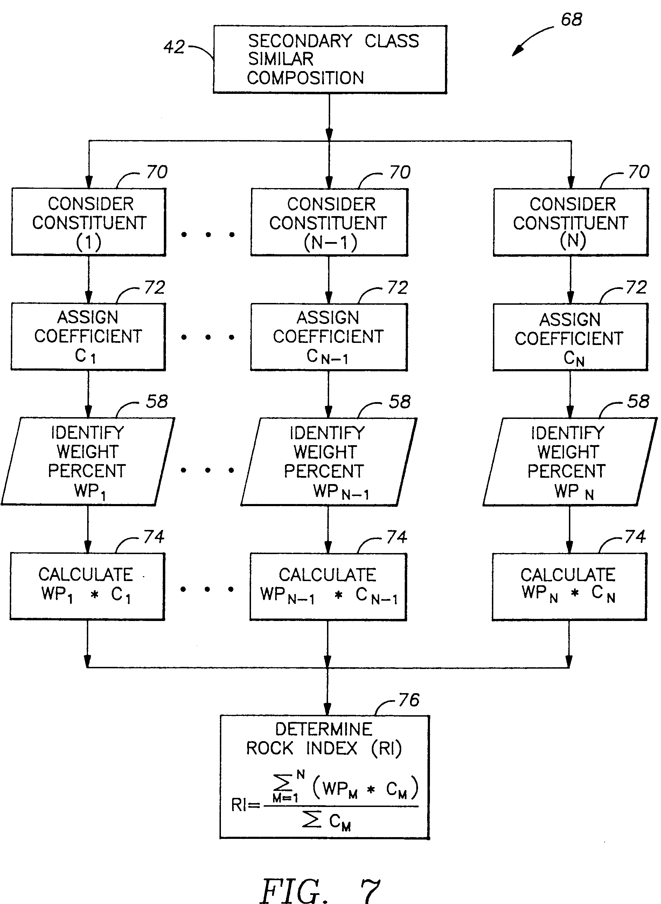

Figure 7 is a flow chart 68 depicting a secondary scheme for grouping samples with similar compositions using a rock index (RI). The rock index as defined by this disclosure is an indication of the dominant constituents comprising the sample. The rock index may be calculated by assigning a coefficient (step 72) to each of the constituents considered in step 72. The number (N) of coefficients may correspond to the number of constituents. For example if thirteen constituents were identified, the coefficients may range consecutively from 1 to 13. It is preferred that the coefficients be assigned to each constituent in descending order from the most prominent constituent to the least prominent.

Once the coefficients have been assigned (step 72), the rock index for a sample may be calculated by multiplying (step 74) the weight percent of each constituent (from step 58) by the coefficient assigned in step 72. These values from step 74 are then summed and divided by the sum of the coefficients (step 76). The calculation for the rock index may be represented by the following expression:

$$RI = \Sigma\, (WP_n * C_n) / \Sigma\, (C_n) \quad (1)$$

where RI is the rock index, wen is the weight percent of a given constituent (n), and $C_n$ is the coefficient for the constituent. The rock index will be discussed further below.

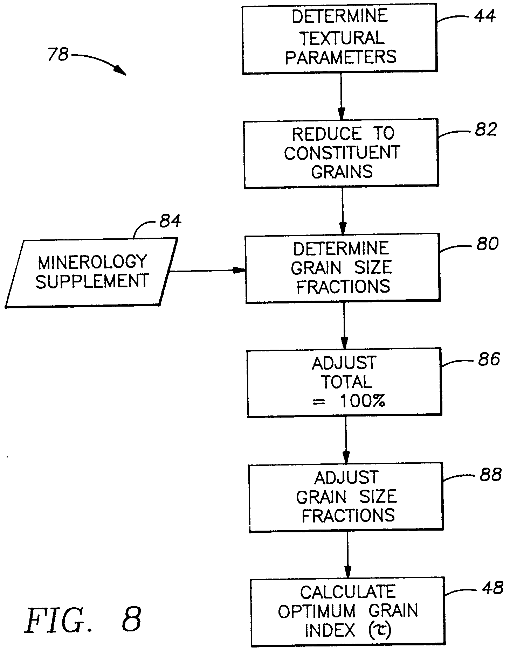

Following identification of the constituents comprising each sample and grouping each accordingly, the method contemplates determining the texture of the samples. Figure 8 is a logic diagram 78 illustrating steps that may be used to determine the textural parameters of a sample. In general, the texture of a sample relates to the physical appearance or character as determined from macroscopic characteristics such as grain size. Determining a grain size distribution, one can also measure grain sorting (also known as variation), skewness of the grain distribution, kurtosis or peakedness of the distribution, as well as the mean and median grain size. The manner of calculating the above parameters is well known in the art and therefore will not be discussed herein. Although some terms used in this disclosure may be associated with other techniques, the instant method calculates several of the above parameters differently which will be discussed in greater detail below.

According to this method the grain size analysis, step 80, forms the theoretical underpinnings of the textural analysis. For unconsolidated sediments, the grain size distribution may be typically determined by passing the sample through a series of stacked sieves, each sieve having a woven mesh designed to pass an average grain size. Alternatively, Core Laboratories, a division of Western Atlas International, Inc., has developed a particle size analysis (PSA) device which determines grain size distribution according to settling rates of particles. Output from the PSA device is given in millimeters which may be readily converted to the U. S. sieve scale. The PSA device is disclosed in greater detail in United States Patent 4,419,870 which is incorporated herein by reference.

In order to determine the grain size distribution, the sample should be substantially reduced to its individual constituent grains as suggested by step 82. In those instances where the sample is already unconsolidated, little or no preparation is necessary. However, friable or poorly indurated samples must be disaggregated in order to pass the individual grains through the various sieves or for use in the PSA device. In order not to alter the size of the individual particles, it is suggested that the sample be mechanically disaggregated using a rubber mortar and pestle.

It is preferred that the weight percentages for the clay size minerals be supplemented by mineralogy (step 84) for the purposes of expediency. As mentioned above, the step of determining the composition of the sample provides values in terms of weight percent. Approximate grain size values are assigned (step 80) for each of the clay mineral weight percentages. For the purposes of this disclosure the clay size fraction may be defined as that less than 38 microns as commonly used in practice. This step is employed because of time constraints and other problems inherent in measuring the finer clay size particles in the grain size analyses. However, the scope of this invention does not foreclose one from measuring the particle size of the finer clay fractions. Techniques such as wet sieving, settling tubes, and laser-based devices may be used to measure the clay size fractions less than 38 microns.

It is preferred throughout the steps below that the sum of the various size fractions of the sample equal 100 percent. Minor errors introduced by rounding may be easily accounted for at step 86 which indicates that the sum of the grain size fractions be normalized to equal one hundred percent. The first opportunity for normalization (step 86) may arise after the original grain size distribution has been made. It is at this stage that minor errors may result in measuring more or less than 100 percent of the sample. A second opportunity for normalization (step 46) occurs during the stage to correct the grain size data for contaminants or grain size alteration. The following discussion will address the preferred manner for correcting those errors introduced during the grain size analysis. For example, in those instances where the sum of the fractions is less than 100 percent, the correction is calculated (step 86) by subtracting the sum of all the other fractions except the catch-all fraction from 100 percent. The catch-all pan is the smallest fraction measured using one of the above techniques (sieve, laser or PSA). This difference may then be substituted for the value in the catch-all fraction. For those occasions where the sum of the fractions is greater than 100 percent, the excess is subtracted from the catch-all fraction provided the catch-all is not less than the total weight percent of the clay minerals. Where the catch-all fraction is less than the total weight percent of the clay minerals, the total weight percent for the clay is subtracted from the catch-all fraction resulting in a negative number. This difference is then divided by the number of fractions larger than the catch-all fraction, the quotient of which is then subtracted from each of the fractions larger than the catch-all. This results in a prorata adjustment to each of the fractions ending at step 88.

As mentioned above, contaminants introduced by the drilling fluid affect the original pore volume of a sample which will influence the porosity and permeability calculations. Such contaminants include barite, a dense mineral used to weight-up the drilling fluid, and smectite, a swelling clay-size material which increases fluid viscosity and the ability of the drilling fluid to remove cuttings from the well bore. The introduction of these materials also affects the pore volume of the sample and should be accounted for (step 46) in calculating porosity and permeability.

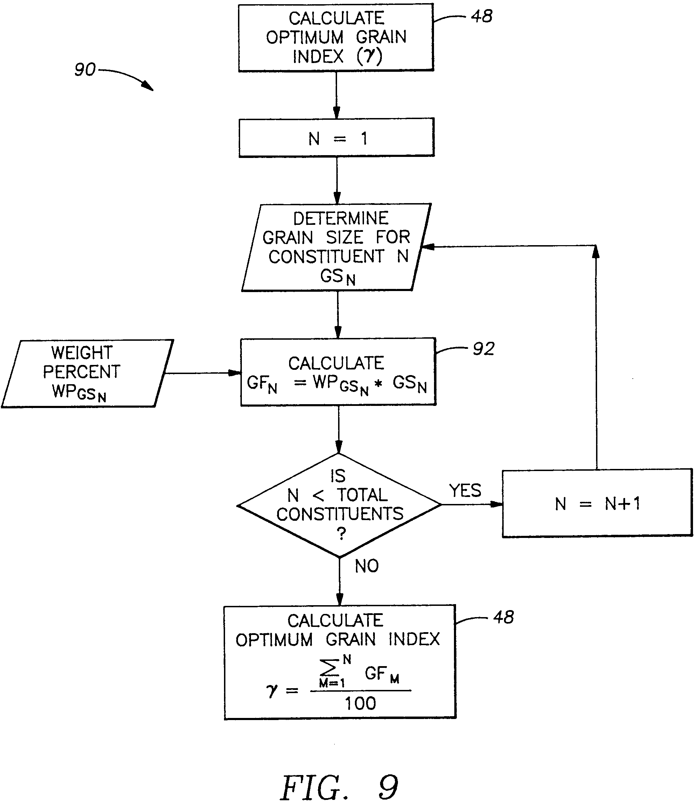

Following segregation and correction of the grain size distribution, the "optimum grain index" ($\tau$, step 48) of the constituent grains is calculated. Figure 9 illustrates one method 90 used to calculate the optimum grain index by summing the products of the grain size and the weight percent of each constituent calculated at step 92. For the purposes of the calculation, the average grain size for the different clay constituents is approximated. For example, the average grain size for illite / smectite may be 2 microns ($\mu$), chlorite 4 $\mu$ and kaolinite 7 $\mu$. Once the products of the weight percent and the grain size have been calculated and summed, the result is divided by 100 to derive the optimum grain index. The optimum grain index is not the median grain diameter as typically thought of in traditional grain size analysis because the individual grains may have been altered by the mechanical disaggregation.

Up to step 48 in the method, the sample has been grouped according to mineralogy (including any contaminants), and the optimum grain index has been determined. These parameters, in conjunction with several relationships defined below, are used to determine the porosity and permeability of a sample (step 50).

Porosity may be defined as the ratio, in percent, of the volume of void space to the total volume of rock or sediment. Mathematically, porosity may be defined by the following expression:

$$\Phi = 1 - [\ln(\delta) * \sigma^4]^{1/\tau} \quad (2)$$

where $\Phi$ (phi) is the porosity, $\delta$ (dell) is a porosity coefficient, $\alpha$ (sigma) is the variance calculated from the grain size distribution, also known as the sorting, and $\tau$ is the optimum grain index. Permeability may be defined as the capacity of a porous material to transmit fluids. Permeability may be defined mathematically by the following expression as:

$$\kappa - 10^{\wedge(20.5 - (8.26 * dkmax'))} \quad (3)$$

where $\tau$ is the permeability, and dkmax' is the optimum diameter for permeability. In expression (2), $\delta$ may be calculated by rewriting the equation as follows:

$$\delta = \exp[(1 - \Phi)^\tau / \sigma^4]. \quad (4)$$

The solution for $\delta$ in equation (4) may than be used to solve for dkmax' in equation (3) as shown in the following expression:

$$dkmax' = \alpha' - 1.69 * \delta + 0.711 * (\tau * \delta). \quad (5)$$

where $\alpha'$ is a permeability coefficient. $\alpha'$ may in turn be solved by rewriting equation (5) such as:

$$\alpha' = dkmax' + 1.69 * \delta - 0.711 * (\tau * \delta), \quad (6)$$

and dkmax' may also be represented by the expression:

$$dkmax' = [\log_{10}(\kappa) - 20.5] / -8.26. \quad (7)$$

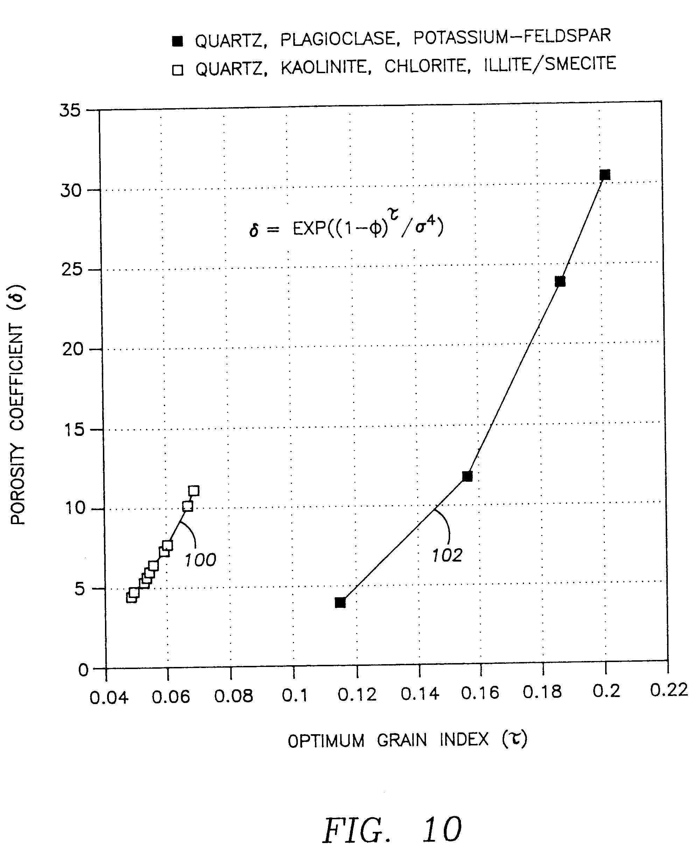

By solving the different variables in the above expressions, one can define a curve representative of the relationship between optimum grain index, porosity coefficient and the permeability coefficient. Figure 10 graphically represents a relationship between the optimum grain index ($\tau$) and the porosity coefficient ($\delta$). According to this relationship,, given the optimum grain index, $\delta$ may be extrapolated and used to calculate the porosity for the sample. The same may be accomplished for permeability.

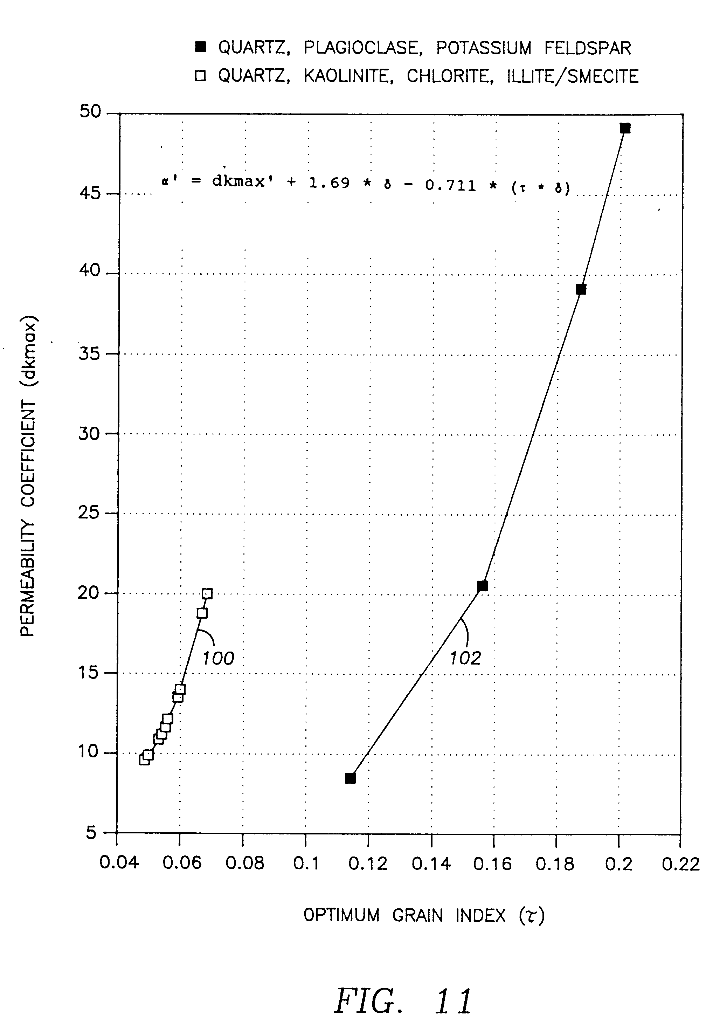

In Figures 10 and 11, several curves are illustrated, each representing a group of samples having different compositions. A distinct curve exists for each different mineral composition. The curves are determined by calculating $\delta$, dkmax' and the optimum grain index from standards using conventional analysis (confining pressure devices are most often used in the industry). That is, a library of curves are defined for an array of samples, each having a different mineral composition. For example, in Figures 10 and 11, curve 100 defines a relationship for samples consisting of quartz grains and clay minerals such as kaolinite, chlorite and illite/smectite. Curve 102 on the right hand side of each graph defines a relationship for samples consisting of quartz, plagioclase and potassium feldspars, and lesser amounts of carbonates and clay minerals. With respect to Figure 10, each curve represents the correlative range of δ to the optimum grain index for a group of samples of that particular composition. Similarly in Figure 11, each curve represents the correlative range of dkmax′ to the optimum grain index for a group of samples having that particular composition. The curve representing each standard is then stored in a library for later reference.

Although the curves illustrated in Figure 10 and 11 may be graphically displayed, it is preferred that the library of standard curves be stored in the memory of a computer. Extrapolating δ and dkmax with the assistance of a computer will assure an accurate determination of porosity and permeability coefficients. In the absence of a computer, substantially accurate results may be achieved by using a suitable scale to read the correct coefficient to the necessary number of significant figures. For example, the plot of Figure 10 may extend over several letter-size pages in order to obtain an accurate determination for δ.

The porosity and permeability values calculated using the above method are equivalent to porosity and permeability values obtained under confining pressures between 500 and 800 pounds per square inch pressure (psi). Adjustment of the porosity and permeability values to such confining pressures are made because a majority of porosity and permeability measurements are run on devices which place the samples under a pressure within this range. The output from this method may be easily calibrated to devices using other, less traditional confining pressures.

It should be understood that the results of this method may be easily integrated with other data to produce outputs indicative of many different characteristics of an oil or gas well. Such other parameters that may be determined by the information provided by this method include total volume of clay minerals, a reservoir quality index, critical waters, core saturations (percent pore space and percent bulk volume), zones of probable production, acid solubility, and sanding potential to name a few. Additionally, the method may be combined with other analyses to provide a comprehensive package of services or goods to a client. To achieve such packages, the results of this method may be displayed a variety of ways, including on a cathode ray tube and paper display. Although the above method has been described from the standpoint of calculating the porosity and thus permeability from the mineralogy and texture, other techniques considered to be within the scope of this invention may be used. For example, conventional well logging tools can be used to determine porosity values. The data, in addition to determining the mineralogy of the formation from well-log data, may be used in conjunction with the use of standards to derive the optimum grain index which may then be used to calculate the permeability-to-air. Moreover, such calculations may be used to calibrate a well-logging technique to more accurately calculate the porosity and thus permeability-to-air. In essence, the above method is "backed-out" or reversed to obtain similar data during the logging of the well.

Our invention has been described with a certain degree of specificity. Variations will occur to those skilled in the art.

## Claims

1. A method for determining a hydraulic characteristic of a material, characterised by the steps of:
   a) determining composition and textural parameters of the material;
   b) determining an optimum grain index from said parameters; and
   c) defining for the determined composition a relationship between the optimum grain index and a hydraulic coefficient and determining therefrom the hydraulic coefficient corresponding to the determined optimum grain index.

2. A method according to claim 1, and comprising calculating the hydraulic characteristic of the material using the determined hydraulic coefficient.

3. A method according to claim 1 or 2, comprising normalising the textural parameters for contaminants prior to determining the optimum grain index therefrom.

4. A method according claim 1, 2 or 3 and comprising obtaining a grain size distribution and separating the distribution into grain size fractions.

5. A method according to claim 4, wherein the step of determining the textural parameters of the material comprises the steps of:
   a) calculating a weight percentage for each grain size fraction in the distribution;
   b) adjusting the grain size distribution to one hundred percent; and
   c) calculating a variance for the grain size distribution.

6. A method according to claim 4 or 5, wherein obtaining a grain size distribution comprises preparing the material so as to produce disaggregate grains and separating the disaggregate grains into grain size fractions of different grain sizes, a weight percent being calculated for the material in each of the grain size fractions.

7. A method according to claim 4, wherein obtaining a grain size distribution comprises the steps of:

a) preparing the material so as to produce disaggregate grains;

b) calculating a settling velocity for the disaggregate grains as a function of the total weight of the sample; and

c) deriving grain size as a function of the settling velocity and weight percent.

8. A method according to claim 4, 5, 6 or 7 when appended to claims 3, wherein normalising the textural parameters comprises the steps of:

a) defining that fraction that corresponds to the smallest grain size as a catch-all fraction; and

b) replacing the catch-all fraction by the difference between the sum of all fractions above the catch-all fraction subtracted from 100.

9. A method according to claim 4, 5, 6 or 7 when appended to claim 3, wherein normalising the textural parameters comprises the steps of:

a) defining that fraction that corresponds to the smallest grain size as a catch-all fraction;

b) subtracting the fraction for total clay minerals from the catch-all-fraction to derive a difference;

c) dividing the difference between the clay mineral fraction and the catch-all fraction by the number of fractions greater in size than the catch-all fraction; and

d) pro rata subtracting the difference from each fraction greater than the catch-all fraction.

10. A method according to any one of claims 4 to 9, wherein determining the optimum grain index comprises the steps of:

a) for each size fraction, finding the product of the weight percent times the average grain size of the fraction;

b) calculating the sum of the products; and

c) dividing the sum of the products by 100, or changing the sum to a decimal fraction.

11. A method according to any one of the preceding claims, wherein determining the composition of the material comprises the steps of:

a) exposing the sample to a source of energy;

b) measuring a response of the source of energy from the sample;

c) comparing the response of the source of energy to a plurality of known responses to identify each response.

12. A method according to any one of claims 1 to 10, wherein the step of determining the composition of the constituent materials comprises the steps of:

a) exposing the constituent materials to an energy waveform;

b) measuring a response of the energy waveform to the constituent materials; and

c) comparing the response of the energy waveform to that for a known material;

13. A method according to any one of claims 1 to 10, wherein the step of determining the composition of the constituent materials comprises the steps of:

a) scanning the constituent material with a beam of radiation;

b) measuring a signal produced as a response to the scanning of the material with the beam of radiation; and

c) comparing the measured signal with known signals to identify the individual constituents and relative weight percentages.

14. A method according to any one of the preceding claims, wherein the step of determining composition and textural parameters comprises the steps of:

a) identifying each of the constituents comprising the material and their relative weight percentages;

b) grouping each material according to its composition to distinguish the material from others; and

c) determining a grain size distribution of the constituents comprising the material.

15. A method according to claim 14, wherein the step of identifying each of the constituents comprising the material and their weight percentages comprises the steps of:

a) sectioning the material for microscopic examination;

b) manually identifying the constituents using a point-count analysis; and

c) calculating a weight percentage of the constituents based upon the point-count analysis.

16. A method according to claim 14, wherein the step of grouping each material according to its composition, in order to discriminate the material from others, comprises the steps of:

a) assigning a unique value to each of the constituents identified in the material;

b) placing the unique value in an expression representing that material; and

c) grouping material having similar expressions in similar categories.

17. A method according to any one of the preceding claims, wherein defining a relationship between the optimum grain index and a hydraulic coefficient comprises the steps of:

a) determining the hydraulic coefficient for a plurality of materials of known composition;

b) determining an optimum grain index and variance for each of the plurality of materials having similar compositions;

c) calculating a hydraulic coefficient for each of the plurality of materials of similar composition from the hydraulic characteristic;

d) plotting the relationships between optimum grain index and the hydraulic coefficient for each of the plurality of materials having similar compositions; and

e) storing the relationships as standards for later reference.

18. A method according to any one of claims 1 to 16, wherein the step of defining a relationship between the optimum grain index and a hydraulic coefficient comprises the steps of:

a) determining a relationship between the hydraulic coefficient and optimum grain index for a plurality of standard samples of known composition;

b) storing the relationship for each of the plurality of standard samples in a library for later reference; and

c) referring to the relationship for a given composition and determining the hydraulic coefficient from the calculated optimum grain index for each sample.

19. A method according to any one of the preceding claims, wherein the hydraulic characteristic is porosity and said hydraulic coefficient is a variable for defining porosity.

20. A method according to any one of claims 1 to 19, wherein the hydraulic characteristic is permeability and said hydraulic coefficient is a variable for defining permeability.

21. A method for determining the hydraulic characteristics for an unconsolidated sample, comprising the steps of:

a) defining relationships between an optimum grain index and hydraulic variables used to define the hydraulic characteristics for a plurality of samples of known composition and storing said relationships for later reference;

b) collecting a sample of unknown composition;

c) determining the composition of the sample;

d) determining the optimum grain index for the sample; and

e) using the optimum grain index, determining the hydraulic variables for the sample by extrapolating from the predefined relationships of a sample of similar composition.

22. A method according to claim 21, wherein the step of defining relationships between the optimum grain index and a hydraulic variable related to the hydraulic characteristics for a plurality of samples of known composition and storing said relationships for later reference, comprises the steps of:

a) collecting a plurality of samples;

b) determining the composition of each of the plurality of samples;

c) determining the hydraulic characteristics for each of the plurality of samples under a confined pressure and deriving hydraulic coefficients, respectively;

d) determining an optimum grain index for each of the plurality of samples;

e) defining a relationship between the optimum grain index and the hydraulic coefficients for each of the plurality of samples according to composition; and

f) storing the defined relationship for later reference.

23. A method according to any one of the preceding claims, further comprising the step of displaying the hydraulic characteristic as a function of sample location.

24. A method for determining the hydraulic characteristic of a subsurface reservoir, comprising the steps of:

a) determining the composition of a sample from said subsurface reservoir;

b) determining a textural characteristic for said sample; and

c) determining a variable defining said hydraulic characteristic according to a relationship between said variable and said textural characteristic predetermined by a standard under a confining pressure and having the same composition.

FIG. 1

FIG. 2

FIG. 3

_38_

```
┌─────────────────┐
│    DETERMINE    │── 40
│   COMPOSITION   │
└─────────────────┘
         │
         ▼
┌─────────────────┐
│ CLASSIFY SAMPLE │── 42
│  ACCORDING TO   │
│   COMPOSITION   │
└─────────────────┘
         │
         ▼
┌─────────────────┐
│    DETERMINE    │── 44
│     TEXTURAL    │
│   PARAMETERS    │
└─────────────────┘
         │
         ▼
┌─────────────────┐
│     CORRECT     │── 46
│     TEXTURAL    │
│   PARAMETERS    │
└─────────────────┘
         │
         ▼
┌─────────────────┐
│    CALCULATE    │── 48
│     OPTIMUM     │
│   GRAIN INDEX   │
└─────────────────┘
         │
         ▼
┌─────────────────┐
│    CALCULATE    │── 50
│    POROSITY &   │
│   PERMEABILITY  │
└─────────────────┘
```

_FIG. 4_

_52_

```
┌─────────────────┐
│    DETERMINE    │── 40
│   COMPOSITION   │
└─────────────────┘
         │
         ▼
┌─────────────────┐
│     PREPARE     │── 54
│     SAMPLE      │
└─────────────────┘
         │
         ▼
┌─────────────────┐
│     EXAMINE     │── 56
│     SAMPLE      │
└─────────────────┘
         │
         ▼
┌─────────────────┐
│    IDENTIFY     │── 58
│   CONSTITUENTS  │
│ (WEIGHT PERCENT.)│
└─────────────────┘
         │
         ▼
┌─────────────────┐
│ CLASSIFY SAMPLE │── 42
│  ACCORDING TO   │
│   COMPOSTION    │
└─────────────────┘
```

_FIG. 5_

*60*

42 — CLASSIFY SAMPLE
ACCORDING TO
COMPOSTION

*63* CONSIDER
CONSTITUENT
(1)

• • • •

*63* CONSIDER
CONSTITUENT
(N−1)

*63* CONSIDER
CONSTITUENT
(N)

*64* YES=X
PRESENT ?
NO=Y

*64* YES=X
PRESENT ?
NO=Y

*64* YES=X
PRESENT ?
NO=Y

*62* ASSIGN VALUE
(X OR Y)
FOR (1)

*62* ASSIGN VALUE
(X OR Y)
FOR (N−1)

*62* ASSIGN VALUE
(X OR Y)
FOR (N)

*66* DETERMINE
OUTPUT
VALUE

FIG. 6

FIG. 7

```
                                    ┌──────────────────┐
                                    │    DETERMINE     │── 44
                                    │    TEXTURAL      │
                                    │   PARAMETERS     │
                                    └──────────────────┘
                                             │
                                             ▼
                                    ┌──────────────────┐
                                    │   REDUCE  TO     │── 82
                                    │  CONSTITUENT     │
                                    │     GRAINS       │
                                    └──────────────────┘
                                             │
          ┌─────────────┐ 84                 ▼
          │ MINEROLOGY  │        ┌──────────────────┐
          │ SUPPLEMENT  │───────▶│    DETERMINE     │── 80
          └─────────────┘        │   GRAIN  SIZE    │
                                 │   FRACTIONS      │
                                 └──────────────────┘
                                             │
                                             ▼
                                    ┌──────────────────┐
                                    │     ADJUST       │── 86
                                    │     TOTAL        │
                                    │    =  100%       │
                                    └──────────────────┘
                                             │
                                             ▼
                                    ┌──────────────────┐
                                    │     ADJUST       │── 88
                                    │   GRAIN  SIZE    │
                                    │   FRACTIONS      │
                                    └──────────────────┘
                                             │
                                             ▼
                                    ┌──────────────────┐
                                    │   CALCULATE      │── 48
                                    │  OPTIMUM  GRAIN  │
                                    │   INDEX  (τ)     │
                                    └──────────────────┘
```

78

*FIG. 8*

CALCULATE
OPTIMUM GRAIN
INDEX ($\gamma$) —— *48*

*90*

N = 1

DETERMINE
GRAIN SIZE FOR
CONSTITUENT N
$GS_N$

WEIGHT
PERCENT
$WP_{GS_N}$

CALCULATE —— *92*
$GF_N = WP_{GS_N} * GS_N$

IS
N < TOTAL
CONSTITUENTS
?

YES

NO

N = N+1

CALCULATE —— *48*
OPTIMUM GRAIN INDEX

$$\gamma = \frac{\sum_{M=1}^{N} GF_M}{100}$$

*FIG. 9*

■ QUARTZ, PLAGIOCLASE, POTASSIUM—FELDSPAR
□ QUARTZ, KAOLINITE, CHLORITE, ILLITE/SMECITE

$$\delta = EXP((1-\phi)^\tau / \sigma^4)$$

*FIG. 10*

■ QUARTZ, PLAGIOCLASE, POTASSIUM FELDSPAR
□ QUARTZ, KAOLINITE, CHLORITE, ILLITE/SMECITE

$\alpha' = dkmax' + 1.69 * \delta - 0.711 * (\tau * \delta)$

*Vertical axis:* PERMEABILITY COEFFICIENT (dkmax)

*Horizontal axis:* OPTIMUM GRAIN INDEX ($\tau$)

*100*

*102*

$$FIG. \quad 11$$

17